# NEUE EUROPÄISCHE PATENTSCHRIFT

(11) **EP 0 846 375 B2**
(45) Veröffentlichungstag und Bekanntmachung des Hinweises auf die Entscheidung über den Einspruch: **11.08.2004**
(45) Hinweis auf die Patenterteilung: 25.08.1999
(21) Anmeldenummer: 96930044.1
(22) Anmeldetag: 16.08.1996
(51) Int. Cl.: H04B 1/66

(54) **VERFAHREN UND VORRICHTUNG ZUR SKALIERBAREN CODIERUNG VON AUDIOSIGNALEN**
PROCESS AND DEVICE FOR THE SCALABLE CODING OF AUDIO SIGNALS
PROCEDE ET DISPOSITIF DE CODAGE VARIABLE DE SIGNAUX AUDIO

(30) Priorität: 06.10.1995 DE 19537338
(43) Veröffentlichungstag der Anmeldung: 10.06.1998
(73) Patentinhaber: Fraunhofer-Gesellschaft zur Förderung der angewandten Forschung e.V., 80686 München (DE)
(72) Erfinder: GRILL, Bernhard, D-91207 Lauf (DE); BRANDENBURG, Karlheinz, D-91054 Erlangen (DE); SEITZER, Dieter, D-91054 Erlangen (DE)
(74) Vertreter: Schoppe, Fritz, Dipl.-Ing.
(86) Internationale Anmeldenummer: PCT/EP1996/003609
(87) Internationale Veröffentlichungsnummer: WO 1997/014229

(56) Entgegenhaltungen:
- WO-A-95/10890
- 99TH CONVENTION 1995 OCTOBER 6-9 NEW YORK AUDIO ENGINEERING SOCIETY AES PREPRINT NR. 4132, 6. - 9.Oktober 1995, NEW YORK, US, XP000613371 B. GRILL / K. BRANDENBURG: "A Two- or Three-Stage Bit-Rate Scalable Audio Coding System."
- 1995 INTERNATIONAL CONFERENCE ON ACOUSTICS, SPEECH, AND SIGNAL PROCESSING. CONFERENCE PROCEEDINGS (CAT. NO.95CH35732), 1995 INTERNATIONAL CONFERENCE ON ACOUSTICS, SPEECH, AND SIGNAL PROCESSING, DETROIT, MI, USA, 9-12 MAY 1995, ISBN 0-7803-2431-5, 1995, NEW YORK, NY, USA, IEEE, USA, Seiten 249-252 vol.1, XP002021183 SHEN I ET AL: "A robust variable-rate speech coder"
- 97TH CONVENTION SAN FRANCISCO 1994 NOVEMBER 10-13 AUDIO ENGINEERING SOCIETY AES PREPRINT NR. 3924, 10. - 13.November 1994, Seiten 1-B, XP000612978 K. BRANDENBURG / B. GRILL: "First Ideas on Scalable Audio Coding." in der Anmeldung erwähnt
- HIGH PERFORMANCE NETWORKING VI. IFIP SIXTH INTERNATIONAL CONFERENCE ON HIGH PERFORMANCE NETWORKING, 1995, PROCEEDINGS OF HIGH PERFORMANCE NETWORKING VI. IFIP SIXTH INTERNATIONAL CONFERENCE ON HIGH PERFORMANCE NETWORKING 1995, PALMA DE MALLORCA, SPAIN, ISBN 0-412-73290-4, 1995, LONDON, UK, CHAPMAN & HALL, UK, Seiten 101-115, XP000624330 CAMPBELL A ET AL: "Meeting end-to-end QoS challenges for scalable flows in heterogeneous multimedia environments"
- 1996 IEEE INTERNATIONAL SYMPOSIUM ON CIRCUITS AND SYSTEMS. CIRCUITS AND SYSTEMS CONNECTING THE WORLD, ISCAS 96 (CAT. NO.96CH35876), 1996 IEEE INTERNATIONAL SYMPOSIUM ON CIRCUITS AND SYSTEMS. CIRCUITS AND SYSTEMS CONNECTING THE WORLD. ISCAS 96,ATLANTA, ISBN 0-7803-3073-0, 1996, NEW YORK, NY, USA, IEEE, USA, Seiten 41-44 vol.2, XP000613385 KUDUMAKIS P E ET AL: "Wavelet packet based scalable audio coding"

## Beschreibung

Die vorliegende Erfindung befaßt sich mit einem Verfahren und einer Vorrichtung zum Codieren von einem Audiosignal oder mehreren Audiosignalen, bei dem aufgrund des Audiosignals bzw. der Audiosignale durch Codierung erzeugte codierte Signale mit niedriger Qualität und niedriger Bit-Rate und gegebenenfalls zusätzlich mit hoher Qualität und hoher Bit-Rate an einen Decoder übertragen werden, um von diesem wahlweise mit niedriger Qualität oder mit hoher Qualität decodiert zu werden.

Obwohl heutzutage noch keine skalierbaren Audiocodierungssysteme im Sinne des zukünftigen Standards MPEG-4 verfügbar sind, ist die Skalierbarkeit ein wesentliches Erfordernis bei der Unterstützung der neuen Funktionalitäten des zukünftigen ISO MPEG-4-Standards.

Allgemein versteht man unter der Skalierbarkeit die Möglichkeit, einen Teilsatz des Bitstromes, der das codierte Audiosignal darstellt, in ein nutzbares Signal zu decodieren. Diese Eigenschaft ist insbesondere dann gewünscht, wenn beispielsweise ein Datenübertragungskanal nicht die nötige vollständige Bandbreite zur Übertragung eines vollständigen Bitstromes zur Verfügung stellt. Ein anderes Beispiel ist eine unvollständige Decodierung auf einem Decoder mit niedriger Komplexität. Obgleich eine kontinuierliche, vollständige Skalierbarkeit wünschenswert wäre, werden in der Praxis verschiedene diskrete Skalierbarkeitsschichten definiert.

Unterschiedliche Skalierbarkeitstypen sind daher Bestandteil der Anforderungsliste für den zukünftigen neuen MPEG-4-Audiostandard.

Erste Vorschläge bezüglich eines Bitratenskalierbaren Systems wurden beschrieben in Brandenburg, H. und Grill, B. 1994, "First Ideas on Scalable Audio Coding", 9th AES-Convention, San Francisco 1995, Vorabdruck Nr. 3924.

Bei dem in dieser Fachveröffentlichung erörterten Verfahren wird ein Audiosignal mit voller Bandbreite zunächst mittels einer innersten sogenannten "Schicht" codiert, welche durch einen Audiocodec gebildet ist, der mit einer niedrigen Abtastrate betrieben wird. Ein Differenzsignal, das durch Subtrahieren des decodierten Signals der innersten Schicht von dem Ursprungssignal oder Originalsignal gebildet wird, wird dann in einem weiteren Audiocodierer oder mittels zweier kaskadierter Audiocodec, die nach dem gleichen Prinzip arbeiten, codiert. Die jeweils codierten Signale werden in einem gemeinsamen Bitstrom an den Decoder übertragen.

Ein hauptsächliches Problem dieser vorgeschlagenen, jedoch bislang nicht implementierten Technik ist daran zu sehen, daß zum Codieren eines Signals von unter 10 kbps eine Abtastrate von 8 kHz in der ersten Stufe benötigt wird, um vernünftige Ergebnisse zu erreichen. Infolgedessen kann die gesamte Systemverzögerung in der Größenordnung von einer Sekunde oder gar mehr liegen.

Ausgehend von diesem Stand der Technik liegt der vorliegenden Erfindung die Aufgabe zugrunde, ein Codierungsverfahren der eingangs genannten Art so weiterzubilden, daß eine Verminderung der durch die Codierung bewirkten Verzögerung erreicht wird.

Diese Aufgabe wird durch ein Verfahren gemäß Patentanspruch 1 oder gemäß Patentanspruch 2 gelöst.

Gemäß einem ersten Aspekt schafft die Erfindung ein Verfahren zum Codieren wenigstens eines Audiosignals, mit folgenden Verfahrensschritten:
- Erzeugung eines ersten codierten Signales durch Codieren des Audiosignales mit einer niedrigen Bitrate und einer verglichen mit der bei einer Codierung des Audiosignales mit hoher Qualität auftretenden Verzögerung niedrigen Verzögerung; und
- Übertragen des ersten codierten Signales zu einem Decoder vor dem Übertragen wenigstens eines weiteren codierten Signales zu dem Decoder, das allein oder zusammen mit dem ersten codierten Signal bei Decodierung ein decodiertes Signal mit der hohen Qualität liefert wobei der Schritt des Übertragens des ersten codierten Signals während einer Erzeugung des weiteren codierten Signales durch Codieren des Audiosignals ausgeführt wird.

Gemäß einem zweiten Aspekt schafft die Erfindung ein Verfahren zum Codieren wenigstens eines Audiosignals, bei dem aufgrund des wenigstens einen Audiosignals durch Codierung erzeugte codierte Signale mit niedriger Qualität und Bitrate und wahlweise zusätzlich mit hoher Qualität und Bitrate an einen Decoder übertragen werden, um von diesem decodiert zu werden, mit folgenden Verfahrensschritten:
- Erzeugen eines ersten codierten Signales durch Codieren des Audiosignales mit einer niedrigen Bitrate und einer verglichen mit der bei der Codierung des Audiosignales mit hoher Qualität auftretenden Verzögerung niedrigen Verzögerung;
- Erzeugen eines zweiten codierten Signales durch Codieren des Audiosignales oder wenigstens eines weiteren, von dem Audiosignal abgeleiteten Signales, mit einer hohen Bit-rate, wobei das zweite codierte Signal allein oder zusammen mit dem ersten codierten Signal bei Decodierung ein decodiertes Signal mit der hohen Qualität liefert;
- Übertragen des ersten codierten Signales zu einem Decoder; und
- falls Decodierung mit hoher Qualität gewünscht ist, Übertragen des zweiten codierten Signales zu dem Decoder nach dem Übertragen des ersten codierten Signales zu dem Decoder.

Die erfindungsgemäßen Verfahren bewirken eine niederqualitative, jedoch verzögerungsarme Übertragung der Audiodaten im wesentlichen mit der Verzögerung der ersten Codierung und damit eine Datenverbindung mit einer Verzögerung, die erheblich niedriger ist als die Verzögerung des Gesamtsystems.

Mit der systembedingten Gesamtverzögerung kann der empfängerseitige Decoder auch das hochqualitative decodierte Signal erzeugen. Falls niederqualitative, verzögerungsarme decodierte Signale ausreichend sind, genügt die Übertragung des ersten codierten Signales an den Empfänger.

Ausgehend von dem genannten Stand der Technik liegt der vorliegenden Erfindung ferner die Aufgabe zugrunde, eine Codierungsvorrichtung der eingangs genannten Art so weiterzubilden, daß eine Verminderung der durch die Codierung bewirkten Verzögerung erreicht wird.

Diese Aufgabe wird durch eine Vorrichtung gemäß Patentanspruch 9 oder gemäß Patentanspruch 10 gelöst.

Gemäß einem dritten Aspekt schafft die Erfindung eine Codiervorrichtung zum Codieren wenigstens eines Audiosignals zum Erzeugen von codierten Signalen mit niedriger Qualität und Bitrate und wahlweise zusätzlich mit hoher Qualität und Bitrate, mit
- einer ersten Codiervorrichtung zum Erzeugen eines ersten codierten Signales durch Codieren des Audiosignales mit einer niedrigen Bitrate und einer verglichen mit der bei der Codierung des Audiosignales mit hoher Qualität auftretenden Verzögerung niedrigen Verzögerung;
- einem ersten Decodierer, dem das erste codierte Signal zugeführt wird;
- einer ersten Verzögerungsschaltung, deren Verzögerung derjenigen der ersten Codiervorrichtung und des ersten Decodierer entspricht;
- einer Summationsschaltung, die die zeitliche Differenz des Ausgangssignals des ersten Decodierers und der ersten Verzögerungsschaltung bildet;
- einer zweiten Codiervorrichtung zum Erzeugen eines zweiten codierten Signales durch Codieren des Audiosignales oder wenigstens eines weiteren, von dem Audiosignal abgeleiteten Signales, mit einer hohen Bitrate, wobei das zweite codierte Signal allein oder zusammen mit dem ersten codierten Signal bei Decodierung ein decodiertes Signal mit der hohen Qualität liefert;
- einem Bitstrom-Multiplexer, dem das erste codierte Signal und das zweite codierte Signal zugeführt werden;
- einer Entscheidungsstufe, die entweder das von der ersten Verzögerungsschaltung verzögerte Audiosignal oder das von der Summationsschaltung gebildete zeitliche Differenzsignal der zweiten Codiervorrichtung zuführt; und
- einer der zweiten Codiervorrichtung nachgeschalteten zweiten Verzögerungsschaltung, durch die das zweite codierte Signal verzögert wird, wodurch das zweite codierte Signal vor dem ersten codierten Signal dem Bitstrom-Multiplexer zugeführt wird.

Gemäß einem vierten Aspekt schafft die Erfindung eine Codiervorrichtung zum Codieren wenigstens eines Audiosignals zum Erzeugen von codierten Signalen mit niedriger Qualität und Bitrate und wahlweise zusätzlich mit hoher Qualität und Bitrate, mit
- einer Vorrichtung zum Transformieren des Audiosignals in den Spektralbereich;
- einer ersten Quantisierungs- und Codierstufe zum Erzeugen eines ersten quantisiertes Signals mit vergleichsweise niedriger Bitrate;
- einer Requantisierungsstufe, die der ersten Quantisierungs- und Codierstufe nachgeschaltet ist;
- einer Spektralsummationsvorrichtung zur spektralen Differenzbildung der Ausgangssignale der Requantisierungsstufe und der Vorrichtung zum Transformieren des Audiosignal in den Spektralbereich;
- einer zweiten Quantisierungs- und Codierstufe zum Erzeugen eines zweiten, verglichen mit dem ersten Signal feiner quantisierten Signals mit verglichen mit dessen Bit-rate hoher Bitrate, aufgrund des Ausgangssignals der Spektralsummationsvorrichtung;
- einer der zweiten Quantisierungs- und Codierstufe nachgeschalteten Verzögerungsstufe;
- einem Bitstromformatierer, der der ersten Quantisierungs- und Codierstufe und der Verzögerungsstufe nachgeschaltet ist, zum Übertragen des Bitstroms der ersten Quantisierungs- und Codierungsstufe im ausgangsseitigen Gesamtbitstrom zeitlich versetzt vor dem Bitstrom der zweiten Quantisierungs- und Codierungsstufe.

Bevorzugte Ausführungsbeispiele von Prinzipschaltungen zur Durchführung bevorzugter Ausführungsbeispiele des erfindungsgemäßen Verfahrens werden nachfolgend unter Bezugnahme auf die beiliegenden Zeichnungen näher erläutert. Es zeigen:
- Fig. 1: ein Blockdiagramm einer Schaltung zum Durchführen des erfindungsgemäßen Verfahrens mit Differenzbildung im Zeitbereich; und
- Fig. 2: ein Blockdiagramm einer Schaltung zum Durchführen des erfindungsgemäßen Verfahrens mit Differenzbildung im Spektralbereich.

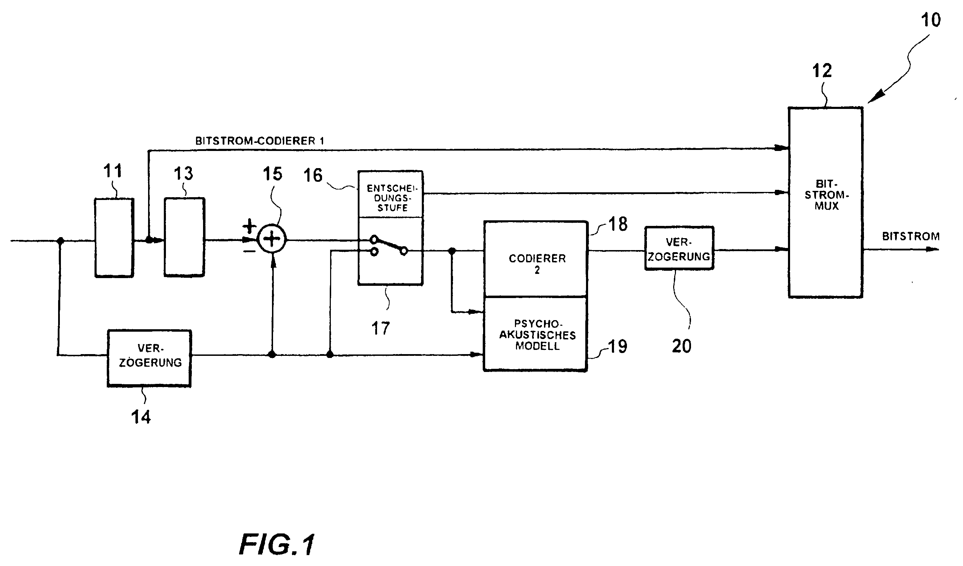

Die in Fig.1 gezeigte Schaltung, die in ihrer Gesamtheit mit dem Bezugszeichen 10 bezeichnet ist, umfaßt einen ersten Codierer 11, der das eingangsseitige Audiosignal mit vergleichsweise niedriger Qualität und niedriger Bitrate codiert.

Die durch diese Codierung bedingte Verzögerung ist, wie noch im einzelnen verdeutlicht wird, erheblich kleiner als die Verzögerung des Gesamtsystems für die gesamte Codierung des eingangsseitigen Audiosignals mit einer hohen Qualität und hohen Bitrate. Das so erzeugte erste codierte Signal wird einerseits einem Eingang eines Bitstrom-Multiplexers 12 direkt zugeführt und wird andererseits einem ersten Decodierer 13 zugeführt, der zusammen mit dem ersten Codierer 11 eine Codexstufe bildet.

Das Audiosignal wird ferner einer ersten Verzögerungsschaltung 14 zugeführt, deren Verzögerung derjenigen der Codexstufe 11, 13 entspricht. Am Summationspunkt 15 wird die zeitliche Differenz des Ausgangssignals der Codexstufe 11, 13 und der ersten Verzögerungsschaltung 14 gebildet.

Eine Entscheidungsstufe 16 selektiert entweder das von der ersten Verzögerungsschaltung 14 verzögerte Audiosignal oder das am Summationspunkt 15 gebildete zeitliche Differenzsignal mittels eines Schalters 17 für die weitere Verarbeitung, d.h. die Codierung mittels eines zweiten Codierers 18, der also entweder das zeitliche Differenzsignal oder das verzögerte Audiosignal mit hoher Qualität und Bitrate codiert. Bei dieser Codierung wird eine psychoakustische Berechnung zur Berücksichtigung der Mithörschwelle aufgrund zumindest des Audiosignals und gegebenenfalls zusätzlich aufgrund des Differenzsignals vorgenommen. Zu diesem Zweck umfaßt der zweite Codierer 18 ein psychoakustisches Modul 19. Das Ausgangssignal des zweiten Codierers 18 wird über eine zweite Verzögerungsschaltung 20 einem weiteren Eingang des Bitstrommultiplexers 12 zugeführt.

Der Bitstrom des ersten Codierers 11 wird durch den Bitstrommultiplexer 12 im ausgangsseitigen Gesamtbitstrom zeitlich versetzt vor dem Bitstrom des zweiten Codierers 18 übertragen. Während der Übertragung der Bits des ersten codierten Signals, das von dem ersten Codierer 11 erzeugt wird, findet unter Berücksichtigung der erforderlichen Verzögerungen die Codierung durch den zweiten Codierer 18 statt, dessen Bitstrom nach Abschluß der Übertragung des Bitstroms des ersten codierten Signals zum Decoder übertragen wird.

Dadurch ermöglicht das erfindungsgemäße Verfahren eine niederqualitative, jedoch verzögerungsarme Übertragung der Audiodaten im wesentlichen mit der Verzögerung des ersten Codierers 11 und damit eine Datenverbindung mit einer Verzögerung, die erheblich niedriger ist als die Verzögerung des Gesamtsystems. Mit der systembedingten Gesamtverzögerung kann der empfängerseitige Decoder auch das hochqualitative decodierte Signal erzeugen.

Falls niederqualitative, verzögerungsarme decodierte Signale ausreichend sind, genügt die Übertragung der vom ersten Codierer stammenden Daten an den Empfänger.

Die Entscheidungsstufe 16 gibt an den Bitstrommultiplexer 12 ein Bit weiter, welches festlegt, ob das Differenzsignal oder das verzögerte Audiosignal durch den zweiten Codierer 18 verarbeitet werden. Durch diese übertragene Zusatzinformation ist der empfängerseitige Decodierer in der Lage, das Signal in richtiger Weise zusammenzusetzen. Vorzugsweise wird für je einen Zeitabschnitt mit einer vorbestimmten Anzahl von Abtastwerten ein Bit übertragen, das angibt, ob eine Differenzbildung im Zeitbereich vorgenommen worden ist oder nicht.

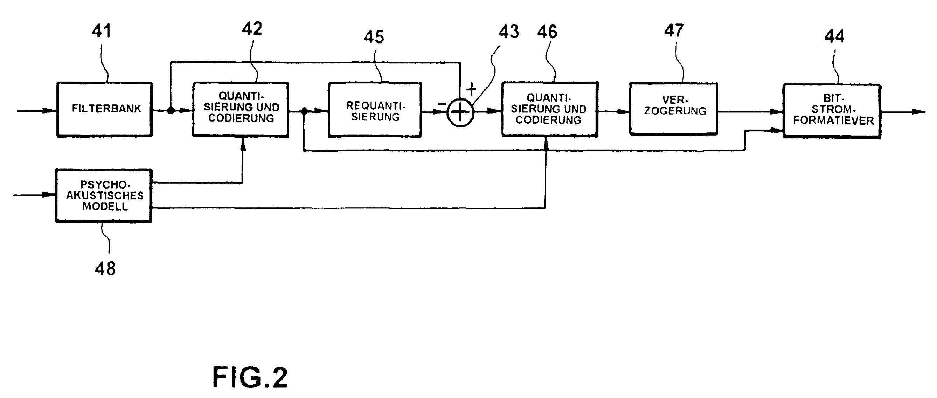

Fig. 2 zeigt mit dem Bezugszeichen 40 ein Blockdiagramm einer Schaltung, die gleichfalls zur Durchführung des erfindungsgemäßen Verfahrens dient, bei der jedoch die Differenzbildung im Spektralbereich vorgenommen wird.

Das Audiosignal wird mittels einer Filterbank 41 in den Spektralbereich transformiert und einerseits einer ersten Quantisierungs- und Codierungsstufe 42 und andererseits einem Spektralsummationspunkt 43 zugeführt. Das Ausgangssignal der ersten Quantisierungs- und Codierungsstufe 42 wird einerseits einem Bitstromformatierer 44 und andererseits einer Requantisierungsstufe 45 zugeführt, deren Ausgangssignal zur spektralen Differenzbildung mit negativem Vorzeichen dem Spektralsummationspunkt 43 zugeführt wird.

Das Differenzsignal wird einer zweiten Quantisierungs- und Codierungsstufe 46 zugeführt, deren Ausgangssignal über eine Verzögerungsstufe 47 dem Bitstromformatierer 44 zugeführt wird. Der Bitstrom der ersten Quantisierungs- und Codierungsstufe 42 wird durch den Bitstromformatierer 44 im ausgangsseitigen Gesamtbitstrom zeitlich versetzt vor dem Bitstrom zweiten Quantisierungs- und Codierungsstufe 46 übertragen.

Das Audiosignal wird zur Berücksichtigung der Mithörschwelle über ein psychoakustisches Modell 48 sowohl in der ersten wie auch in der zweiten Quantisierungs- und Codierungsstufe 42, 46 berücksichtigt.

Die ersten Quantisierungsstufe 42 verarbeitet allgemein ein gröberquantisiertes Signal mit vergleichsweise niedriger Bitrate beispielsweise unter Verwendung eines Hoffman-Codes. Dies erfolgt unter der Steuerung eines zweiten Ausgangs des psychoakustischen Modells 48. Dieser zweite Ausgang gibt Hinweise darüber, bei welchen Frequenzen die Rauschpegel erhöht werden können, während der niedrigste Grad der Hörbarkeit des Quantisierungsfehlers beibehalten wird.

Nach dieser Stufe 42 wird ein feiner quantisiertes Signal in der Stufe 46 erzeugt, in dem Skalierungsfaktoren und ein zusätzliches Codewort eingesetzt werden, wie z.B. ein PCM-Codewort. Dieses Konzept kann auf weitere niederwertigere Bits in einer Schicht mit noch höherer Qualität erweitert werden.

## Patentansprüche

1. Verfahren zum Codieren wenigstens eines Audiosignals, mit folgenden Verfahrensschritten:
Erzeugung eines ersten codierten Signales durch Codieren des Audiosignales mit einer niedrigen Bitrate und einer verglichen mit der bei einer Codierung des Audiosignales mit hoher Qualität auftretenden Verzögerung niedrigen Verzögerung; und
Übertragen des ersten codierten Signales zu einem Decoder vor dem Übertragen wenigstens eines weiteren codierten Signales zu dem Decoder, das allein oder zusammen mit dem ersten codierten Signal bei Decodierung ein decodiertes Signal mit der hohen Qualität liefert,
wobei der Schritt des Übertragens des ersten codierten Signals während einer Erzeugung des weiteren codierten Signales durch Codieren des Audiosignals ausgeführt wird.

2. Verfahren zum Codieren wenigstens eines Audiosignals, bei dem aufgrund des wenigstens einen Audiosignals durch Codierung erzeugte codierte Signale mit niedriger Qualität und Bitrate und wahlweise zusätzlich mit hoher Qualität und Bitrate an einen Decoder übertragen werden, um von diesem decodiert zu werden, mit folgenden Verfahrensschritten:
Erzeugen eines ersten codierten Signales durch Codieren des Audiosignales mit einer niedrigen Bitrate und einer verglichen mit der bei der Codierung des Audiosignales mit hoher Qualität auftretenden Verzögerung niedrigen Verzögerung;
Erzeugen eines zweiten codierten Signales durch Codieren des Audiosignales oder wenigstens eines weiteren, von dem Audiosignal abgeleiteten Signales, mit einer hohen Bit-rate, wobei das zweite codierte Signal allein oder zusammen mit dem ersten codierten Signal bei Decodierung ein decodiertes Signal mit der hohen Qualität liefert;
Übertragen des ersten codierten Signales zu einem Decoder; und
falls Decodierung mit hoher Qualität gewünscht ist, Übertragen des zweiten codierten Signales zu dem Decoder nach dem Übertragen des ersten codierten Signales zu dem Decoder.

3. Verfahren nach Anspruch 1 oder 2, mit folgenden Verfahrensschritten:
- Decodieren des ersten codierten Signales,
- Verzögern des Audiosignales um eine Verzögerung, welche der Verzögerung entspricht, die durch die Codierung des ersten codierten Signales und dessen Decodierung auftritt;
- Subtrahieren des decodierten ersten Signales und des verzögerten Signales zur Erzeugung eines Differenzsignales, und
- Codieren des Differenzsignales mit einer hohen Qualität und einer hohen Bitrate; und
- Übertragen des codierten Differenzsignales an den Decoder nach der Übertragung des ersten codierten Signales.

4. Verfahren nach Anspruch 1 oder 2, mit folgenden Verfahrensschritten:
- Codieren des Audiosignales mit einer hohen Qualität und hohen Bitrate; und
- Übertragen des codierten Audiosignales an den Decoder nach der Übertragung des ersten codierten Signales.

5. Verfahren nach Anspruch 3, bei dem das erste codierte Signal in einem Bitstrom innerhalb eines Bitstromrahmens übertragen wird, welcher vor dem Bitstromrahmen liegt, innerhalb dessen das codierte Differenzsignal übertragen wird.

6. Verfahren nach Anspruch 4, bei dem das erste codierte Signal in einem Bitstrom innerhalb eines Bitstromrahmens übertragen wird, welcher vor dem Bitstromrahmen liegt, innerhalb dessen das mit hohen Qualität codierte weitere Signal übertragen wird.

7. Verfahren nach einem der Ansprüch 3 bis 5, bei dem innerhalb eines Zeitabschnittes mit einer gegebenen Anzahl von Abtastwerten jeweils eine Information übertragen wird, die angibt, ob das mit hoher Qualität und Bitrate übertragene codierte Signal durch Codierung des wenigstens einen Audiosignales oder durch Differenzbildung des decodierten ersten Signales und des verzögerten Signales erzeugt worden ist.

8. Verfahren nach einem der vorhergehenden Ansprüche in direkter oder indirekter Rückbeziehung auf Anspruch 3, bei dem bei der Codierung des Differenzsignales des decodierten ersten Signales und des verzögerten Signales eine psychoakustische Berechnung zur Berücksichtigung der Mithörschwelle vorgenommen wird, wobei die psychoakustische Berechnung aufgrund des wenigstens einen Audiosignales oder aufgrund des wenigstens einen Audiosignales und zusätzlich aufgrund des Differenzsignales vorgenommen wird.

9. Codiervorrichtung zum Codieren wenigstens eines Audiosignals zum Erzeugen von codierten Signalen mit niedriger Qualität und Bitrate und wahlweise zusätzlich mit hoher Qualität und Bitrate, mit
einer ersten Codiervorrichtung (11; 42) zum Erzeugen eines ersten codierten Signales durch Codieren des Audiosignals mit einer niedrigen Bitrate und einer verglichen mit der bei der Codierung des Audiosignals mit hoher Qualität auftretenden Verzögerung niedrigen Verzögerung;
einem ersten Decodierer (13), dem das erste codierte Signal zugeführt wird;
einer ersten Verzögerungsschaltung (14), deren Verzögerung derjenigen der ersten Codiervorrichtung (11; 42) und des ersten Decodierers (13) entspricht;
einer Summationsschaltung (15), die die zeitliche Differenz des Ausgangssignals des ersten Decodierers (13) und der ersten Verzögerungsschaltung (14) bildet;
einer zweiten Codiervorrichtung (18; 46) zum Erzeugen eines zweiten codierten Signales durch Codieren des Audiosignals oder wenigstens eines weiteren, von dem Audiosignal abgeleiteten Signales, mit einer hohen Bit-rate, wobei das zweite codierte Signal allein oder zusammen mit dem ersten codierten Signal bei Decodierung ein decodiertes Signal mit der hohen Qualität liefert;
einem Bitstrom-Multiplexer (12), dem das erste codierte Signal und das zweite codierte Signal zugeführt werden;
**gekennzeichnet durch**
eine Entscheidungsstufe (16), die entweder das von der ersten Verzögerungsschaltung (14) verzögerte Audiosignal oder das von der Summationsschaltung (15) gebildete zeitliche Differenzsignal der zweiten Codiervorrichtung (18) zuführt; und
eine der zweiten Codiervorrichtung (18) nachgeschaltete zweite Verzögerungsschaltung (20), **durch** die das zweite codierte Signal verzögert wird, wodurch das zweite codierte Signal vor dem ersten codierten Signal dem Bitstrom-Multiplexer (12) zugeführt wird.

10. Codiervorrichtung zum Codieren Wenigstens eines Audiosignals zum Erzeugen von codierten Signalen mit niedriger Qualität und Bitrate und wahlweise zusätzlich mit hoher Qualität und Bitrate, mit
einer Vorrichtung (41) zum Transformieren des Audiosignals in den Spektralbereich;
einer ersten Quantisierungs- und Codierstufe (42) zum Erzeugen eines ersten quantisiertes Signals mit vergleichsweise niedriger Bitrate;
einer Requantisierungsstufe (45), die der ersten Quantisierungs- und Codierstufe (42) nachgeschaltet ist;
einer Spektralsummationsvorrichtung (43) zur spektralen Differenzbildung der Ausgangssignale der Requantisierungsstufe (45) und der Vorrichtung (41) zum Transformieren des Audiosignals in den Spektralbereich;
einer zweiten Quantisierungs- und Codierstufe (46) zum Erzeugen eines zweiten, verglichen mit dem ersten Signal feiner quantisierten Signals mit verglichen mit dessen Bitrate hoher Bitrate, aufgrund des Ausgangssignals der Spektralsummationsvorrichtung (43);
einer der zweiten Quantisierungs- und Codierstufe (46) nachgeschalteten Verzögerungsstufe (47);
einem Bitstromformatierer (44), der der ersten Quantisierungs- und Codierstufe (42) und der Verzögerungsstufe (47) nachgeschaltet ist, zum Übertragen des Bitstroms der ersten Quantisierungs- und Codierungsstufe (42) im ausgangsseitigen Gesamtbitstrom zeitlich versetzt vor dem Bitstrom der zweiten Quantisierungs- und Codierungsstufe (46).

## Claims

1. A method of coding at least one audio signal, comprising the following method steps:
generating a first coded signal by coding the audio signal with a low bit rate and low delay in comparison with the delay occurring in coding the audio signal with high quality; and
transmitting the first coded signal to the decoder prior to transmitting at least one additional coded signal to the decoder, which alone or together with the first coded signal provides a decoded signal with said high quality upon decoding,
the step of transmitting the first coded signal being performed during generation of the additional coded signal by coding the audio signal.

2. A method of coding at least one audio signal, in which coded signals, produced on the basis of the at least one audio signal by coding, with low quality and bit rate, and optionally with high quality and bit rate in addition, are transmitted to a decoder for being decoded by the same, said method comprising the following method steps:
generating a first coded signal by coding the audio signal with a low bit rate and low delay in comparison with the delay occurring in coding the audio signal with high quality;
generating a second coded signal by coding said audio signal or at least one additional signal derived from the audio signal, with a high bit rate, with the second coded signal alone or together with the first coded signal providing a decoded signal with said high quality upon decoding;
transmitting the first coded signal to the decoder; and
in case decoding with high quality is desired, transmitting the second coded signal to the decoder after transmitting the first coded signal to the decoder.

3. The method of claim 1 or 2, comprising the following method steps:
- decoding the first coded signal,
- delaying the audio signal by a delay that corresponds to the delay occurring by coding the first coded signal and by decoding thereof;
- subtracting the decoded first signal and the delayed signal so as to form a difference signal, and
- coding the difference signal with a high quality and a high bit rate; and
- transmitting the coded difference signal to the decoder after transmission of the first coded signal.

4. The method of claim 1 or 2, comprising the following method steps:
- coding the audio signal with a high quality and a high bit rate; and
- transmitting the coded audio signal to the decoder after transmission of the first coded signal.

5. The method of claim 3, wherein the first coded signal is transmitted in a bit stream within a bit stream frame situated before the bit stream frame within which the coded difference signal is transmitted.

6. The method of claim 4, wherein the first coded signal is transmitted in a bit stream within a bit stream frame situated before the bit stream frame within which the additional signal coded with high quality is transmitted.

7. The method of any of claims 3 to 5, wherein, within a time section having a given number of sampling values, a particular item of information is transmitted each, indicating whether the coded signal transmitted with high quality and bit rate has been created by coding of the at least one audio signal or by establishing the difference of the decoded first signal and the delayed signal.

8. The method of any of the preceding claims in direct or indirect dependency upon claim 3, wherein coding of the difference signal of the decoded first signal and the delayed signal involves a psychoacoustic calculation for taking account of the masking pattern, with said psychoacoustic calculation being performed on the basis of the at least one audio signal or on the basis of the at least one audio signal and in addition thereto on the basis of the difference signal.

9. A coding apparatus for coding at least one audio signal for generating coded signals with low quality and bit rate and, optionally, with high quality and bit rate in addition, said apparatus comprising
a first coding means (11; 42) for generating a first coded signal by coding the audio signal with a low bit rate and low delay in comparison with the delay occurring in coding the audio signal with high quality;
a first decoder (13) fed with the first coded signal;
a first delay circuit (14) having a delay corresponding to that of the first coding means (11; 42) and the first decoder (13);
a summing circuit (15) establishing the difference in time between the output signals of the first decoder (13) and the first delay circuit (14);
a second coding means (18; 46) for generating a second coded signal by coding the audio signal or at least one additional signal derived from the audio signal, with a high bit rate, with the second coded signal alone or together with the first coded signal providing a decoded signal with said high quality upon decoding;
a bit stream multiplexer (12) fed with the first coded signal and with the second coded signal;
**characterized by**
a decision stage (16) which feeds to the second coding means (17) either the audio signal delayed by the first delay circuit (14) or the time difference signal formed by the summing circuit (15); and
a delay circuit (20) connected downstream of the second coding means (18), by which delay circuit the second coded signal is delayed, whereby the second coded signal is fed to the bit stream multiplexer (12) prior to the first coded signal.

10. A coding apparatus for coding at least one audio signal for generating coded signals with low quality and bit rate and, optionally, with high quality and bit rate in addition, said apparatus comprising
a means (14) for transforming the audio signal to the spectral range;
a first quantization and coding stage (42) for generating a first quantized signal with comparatively low bit rate;
a requantization stage (45) connected downstream of the first quantization and coding stage (42);
a spectral summation means (43) for forming the spectral difference between the output signals of the requantization stage (45) and the means (41) for transforming the audio signal to the spectral range;
a second quantization and coding stage (46) for generating, on the basis of the output signal of the spectral summation means (43), a second signal which in comparison with the first signal is more finely quantized and has a high bit rate in comparison with the bit rate of the first signal;
a delay stage (47) connected downstream of the second quantization and coding stage (46);
a bit stream formatter (44) connected downstream of the first quantization and coding stage (42) and the delay stage (47) for transmitting the bit stream of the first quantization and coding stage (42) in the overall bit stream on the output side in time staggered manner prior to the bit stream of the second quantization and coding stage (46).

## Revendications

1. Procédé de codage d'au moins un signal audio qui comprend les étapes consistant à:
engendrer par codage du signal audio un premier signal codé à débit binaire faible et à retard faible par rapport au retard qui apparaît lors d'un codage de qualité élevée du signal audio; et
transférer à un décodeur le premier signal codé avant de transférer au décodeur au moins un autre signal codé qui fournit lors du décodage, seul ou en coopération avec le premier signal codé, un signal décodé de la qualité élevée,
dans lequel l'étape du transfert du premier signal codé est exécutée pendant une génération de l'autre signal codé par codage du signal audio.

2. Procédé de codage d'au moins un signal audio dans lequel des signaux codés à qualité et à débit binaire faibles et facultativement en outre des signaux codés d'une qualité et d'un débit binaire plus élevés, engendrés par codage sur la base dudit signal audio unique au moins, sont transmis à un décodeur, afin d'être décodés par ce dernier, comprenant les étapes consistant à:
engendrer par codage du signal audio un premier signal codé à débit binaire faible et à retard faible par rapport au retard qui apparaît lors du codage de qualité élevée du signal audio; et
engendrer par codage du signal audio ou d'au moins un autre signal dérivé du signal audio un deuxième signal codé à débit binaire élevé, le deuxième signal codé fournissant lors du décodage, seul ou en coopération avec le premier signal codé, un signal décodé de la qualité élevée;
transmettre le premier signal codé à un décodeur; et
dans le cas où le décodage à qualité élevée est souhaité, transmettre au décodeur le deuxième signal codé après la transmission du premier signal codé au décodeur.

3. Procédé selon la revendication 1 ou 2, comprenant les étapes consistant à:
- décoder le premier signal codé,
- retarder le signal audio d'un retard qui correspond au retard qui apparaît par suite du codage du premier signal codé et de son décodage;
- effectuer une soustraction entre le premier signal décodé et le signal retardé pour engendrer un signal de différence,
- coder le signal de différence selon une qualité élevée et un débit binaire élevé; et
- transmettre au décodeur le signal de différence codé après la transmission du premier signal codé.

4. Procédé selon la revendication 1 ou 2, comprenant les étapes consistant à:
- coder le signal audio selon une qualité élevée et un débit binaire élevé; et
transmettre au décodeur le signal audio codé après la transmission du premier signal codé.

5. Procédé selon la revendication 3, dans lequel le premier signal codé est transmis dans un flux de bits inclus à l'intérieur d'un bloc de flux de bits qui se trouve avant le bloc de flux de bits à l'intérieur duquel est transmis le signal de différence codé.

6. Procédé selon la revendication 4, dans lequel le premier signal codé est transmis dans un flux de bits inclus à l'intérieur d'un bloc de flux de bits qui se trouve avant le bloc de flux de bits à l'intérieur duquel est transmis le signal additionnel codé à qualité élevée

7. Procédé selon l'une quelconque des revendications 3 à 5, dans lequel une information, qui indique si le signal codé transmis, d'une qualité élevée et d'un débit binaire élevé, a été engendré par codage du signal audio unique au moins ou par formation d'une différence entre le premier signal décodé et le signal retardé, est respectivement transmise avec un nombre défini de valeurs détectées à l'intérieur d'un intervalle de temps.

8. Procédé selon l'une quelconque des revendications précédentes qui se réfère directement ou indirectement à la revendication 3, dans lequel un calcul psycho-acoustique est effectué lors du codage du signal de différence entre le premier signal décodé et le signal retardé pour prendre en compte le seuil d'écoute, le calcul psycho-acoustique étant réalisé en se basant sur le signal audio unique au moins ou en se basant tant sur le signal audio unique au moins que sur le du signal de différence.

9. Dispositif de codage destiné à coder au moins un signal audio pour engendrer des signaux codés à qualité et débit binaire faibles, et facultativement aussi à qualité et débit binaire élevés, comprenant:
un premier dispositif de codage (11; 42) pour engendrer un premier signal codé en codant le signal audio à un débit binaire plus faible et avec un retard faible par rapport au retard qui apparaît lors du décodage du signal audio selon une qualité élevée;
un premier décodeur (13) auquel le premier signal codé est amené;
un premier circuit de retard (14) dont le retard correspond à celui du premier dispositif de codage (11; 42) et du premier décodeur (13);
un circuit de sommation (15) qui forme la différence temporelle entre les signaux de sortie du premier décodeur (13) et du premier circuit de retard (14);
un deuxième dispositif de codage (18; 46) pour engendrer un deuxième signal codé en codant le signal audio ou au moins un autre signal à débit binaire élevé, dérivé du signal audio, le deuxième signal codé fournissant au décodage, seul ou en coopération avec le premier signal codé, un signal décodé de la qualité élevée;
un multiplexeur (12) de flux de bits auquel sont amenés le premier signal codé et le deuxième signal codé;
**caractérisé par**
un étage de décision (16) qui amène au deuxième dispositif de décodage, soit le signal audio retardé par le premier circuit de retard (14), soit le signal de différence temporelle formé par le circuit de sommation (15); et
un deuxième circuit de retard (20) agencé en aval du deuxième dispositif de codage (18), au moyen duquel le deuxième signal codé est retardé d'une manière telle que le deuxième signal codé est amené au multiplexeur (12) de flux de bits avant le premier signal codé.

10. Dispositif de codage destiné à coder au moins un signal audio pour engendrer des signaux codés à qualité et débit binaire faibles et facultativement aussi à qualité et débit linéaire élevés, comprenant:
un dispositif (41) de transformation du signal audio dans le domaine spectral;
un premier étage de quantification et de codage (42) pour engendrer un premier signal quantifié à débit binaire relativement faible;
un étage (45) de nouvelle quantification qui est monté en aval du premier étage (42) de quantification et de codage;
un dispositif (43) de sommation spectrale pour former une différence spectrale entre les signaux de sortie de l'étage (45) de nouvelle quantification et du dispositif (41) de transformation du signal audio dans le domaine spectral;
un deuxième étage (46) de quantification et de codage pour engendrer, sur la base du signal de sortie du dispositif (43) de sommation spectrale, un deuxième signal à quantification plus fine que celle du premier signal et à débit binaire élevé par rapport à ce dernier;
un étage de retard (47) monté en aval du deuxième étage (46) de quantification et de codage;
un formateur (44) de flux de bits qui est monté en aval du premier étage (42) de quantification et de codage et de l'étage de retard (47) afin de transmettre de façon décalée dans le temps, dans le flux de bits global de sortie, le flux de bits du premier étage (42) de quantification et de codage avant le flux de bits du deuxième étage (46) de quantification et de codage.
